(19) Europäisches Patentamt
European Patent Office
Office européen des brevets

(11) **EP 1 602 282 B1**

(12) **EUROPEAN PATENT SPECIFICATION**

(45) Date of publication and mention
of the grant of the patent:
**19.06.2013 Bulletin 2013/25**

(21) Application number: **04718433.8**

(22) Date of filing: **08.03.2004**

(51) Int Cl.:
*A23D 7/005* (2006.01)     *A23D 7/01* (2006.01)

(86) International application number:
**PCT/JP2004/002977**

(87) International publication number:
**WO 2004/077955 (16.09.2004 Gazette 2004/38)**

(54) **FOAMED WATER-IN-OIL TYPE EMULSION COMPOSITION**

GESCHÄUMTES WASSER-IN-ÖL-EMULSIONSPRODUKT

COMPOSITION D'UNE EMULSION AéRéE DU TYPE EAU DANS L'HUILE

(84) Designated Contracting States:
**DE FR GB**

(30) Priority: **07.03.2003 JP 2003061309**
**11.03.2003 JP 2003064588**
**11.03.2003 JP 2003064697**

(43) Date of publication of application:
**07.12.2005 Bulletin 2005/49**

(73) Proprietor: **KAO CORPORATION**
**Chuo-Ku,Tokyo 103-8210 (JP)**

(72) Inventors:
• **UCHIKOSHI, Masanobu**
**c/o Kao Corporation Research**
**Sumida-ku, Tokyo 1318501 (JP)**

• **YASUMASU, Takeshi**
**c/o Kao Corporation Research**
**Sumida-ku, Tokyo 1318501 (JP)**

(74) Representative: **HOFFMANN EITLE**
**Patent- und Rechtsanwälte**
**Arabellastrasse 4**
**81925 München (DE)**

(56) References cited:
**WO-A- 02/11552      JP-A- 7 038 780**
**JP-A- 03 236 734      JP-A- 04 144 632**
**JP-A- 11 113 486      JP-A- 11 113 487**
**JP-A- 11 155 482      US-A- 4 960 602**

• **DATABASE WPI Week 198904 Thomson**
**Scientific, London, GB; AN 1989-028168**
**XP002509019 & JP 63 301765 A (KAO CORP) 8**
**December 1988 (1988-12-08)**

## Description

Field of the Invention

The present invention relates to a foamed water-in-oil type emulsion composition for use in buttercreams or like products.

Background of the Invention

Foamable water-in-oil type emulsion compositions, having external phases of fats and oils, are known to characteristically have a high resistance to proliferation of microorganisms, an excellent shape retention, a good keeping quality and are widely used for foods or food materials, including creams, spreads, sandwiches, cookings, confectionery, breads, and so on (cf. JP-A-1977-126406, JP-A-1986-085141). However, since these emulsion compositions comprise external phases of fats and oils, they inevitably involve inferior in-mouth meltability or like shortcomings, and for such shortcomings to be eliminated, fats and oils constituting the external phases must be replaced with softer types at the sacrifice of their shape retention, thus rendering them more liable to develop oil-off or like oil separation.

JP 63 301765 described a fat and oil composition having high foaming properties without being influenced by properties of solid fats, which is obtained by adding a given amount of diglyceride having a rising melting point of a specific value to fats and oils. However, the fat and oil composition disclosed in JP 63 301765 is non-satisfying in ameliorating the above shortcomings.

As a means to ameliorate such shortcomings, it has been known to add a specific emulsifier (JP-A-2001-178361), or mix a diglyceride having an increased melting point lower than 20 °C in a quantity of 10 to 99 % by weight in the total fats and oils (JP-B-1995-38780), or the like. However, such known means have failed to provide a water-in-oil emulsion composition which exhibits good shape retention and in-mouth meltability at room temperatures (about 25°C) and has a soft feel.

Summary of the Invention

The present invention provides an foamed water-in-oil type emulsion composition containing fats and oils and a liquid sugar, wherein (a) the fats and oils has a solid fat content ranging from 0.5 to 5 % thereof at 25 °C; (b) the fats and oils contains 40 wt% or more of an unsaturated diglyceride having a carbon number ranging from 16 to 18; 0 to 70 wt% of troglyceride; and 0 to 5 wt% of monoglyceride; and (c) the weight ratio of the fats and oils vs. the liquid sugar ranges from 1:0.5 to 1:4.

## MODES FOR CARRYING OUT THE INVENTION

The inventors have found out that a water-in-oil emulsion composition having dramatically improved in-mouth meltability and thermostability with a low specific gravity and a good eating texture (in the first aspect of the present invention) can be produced by using high diglyceride-content fats and oils as base fats and oils for forming an emulsion, if the fats and oils has a specific fatty acids composition, a solid fat content ranges from 0.5 to 5 % thereof at 25°C, and the ratio of the fats and oils vs. liquid sugar contents in the emulsion is kept in a predetermined range.

The foamed water-in-oil type emulsion composition provided by the present invention has improved in-mouth meltability, good shape retention at room temperatures and a good eating texture with a reduced specific gravity, so that the present emulsion composition may be useful as a buttercream for use in the preparation or production of creams spreads, sandwiches, confectionery, breads, and so on.

The foamed water-in-oil type emulsion composition provided by the present invention contains fats and oils and a liquid sugar. The solid fat content of the fats and oils at 25 °C indicated as (a) herein above refers to a solid fat content (SFC) in the fats and oils at 25 °C and ranges preferably from 0.5 to 5 % and more preferably from 1.0 to 5.0 % in view of eating texture such as in-mouth meltability or smooth texture, and thermostable shape retention at 25 °C. The SFC (solid fat content) of the fats and oils at 25 °C herein was measured in accordance with the Tentative 1-1996 NMR Method for Solid Fat Content (given in "Standard Fats and Oils Analysis and Test Methods" edited by Japan Oil Chemical Society). The solid fat content is given in % by weight.

The content in the fats and oils of the unsaturated diglyceride having a carbon number of 16 to 18 indicated under (b) above is 40 wt% or more and ranges preferably from 40 to 90 wt% and further preferably from 40 to 80 wt% from a viewpoint of improvement in eating texture such as foamability or in-mouth meltability. The unsaturated diglyceride having a carbon number ranging from 16 to 18 herein referred to include, but not limited to, fats and oils derived from olive oil, soybean oil, rapeseed oil, castor oil, corn oil, cottonseed oil, peanut oil, safflower oil, sesame oil, or any mixtures, interesterified derivatives, and fatty acids interchange derivatives thereof.

Also, the diglyceride-containing fats and oils has a purity of diglyceride ranging preferably from 78 to 99 wt%, more preferably from 78 to 90 wt% and further preferably from 78 to 85 wt% from a viewpoint of improvement in eating texture involving in-mouth meltability. Further, the content in the fats and oils of diglycerides other than the unsaturated diglyceride having a carbon number of 16 to 18 ranges preferably from 0.5 to 6.0 wt% and more preferably from 0.5 to 5.0 wt% in view of in-mouth meltability.

The diglycerides used for the present invention may be obtained, for example, by: interesterifying a mixture of one or more fats and oils selected from edible fats and oils and glycerin; esterifying edible fats and oils-derived fatty acid composition with glycerin; and reacting a fatty acid with glycerin using lipase. If necessary, any excess monoglyceride formed in glycerides mixtures produced in these processes may be removed by molecular distillation or chromatography. The edible fats and oils used herein include, for example, but not limited to: vegetable fats and oils such as palm oil, rapeseed oil, soybean oil, corn oil, cottonseed oil, safflower oil, olive oil, coconut oil, or palm kernel oil; animal fats and oils such as milk fat, lard, tallow, fish oil; hydrogenated oils of these plant and animal fats and oils; interesterified oils thereof; and mixtures of two or more of these fats and oils.

As the fats and oils used for the emulsion compositions of the present invention, triglycerides or monoglycerides are also used in addition to the foregoing diglycerides. The monoglyceride content in the fats and oils ranges from to 5 wt%, preferably from 0 to 3 wt% and further preferably from 0 to 2 wt% in view of in-mouth meltability.

The triglyceride content ranges from 0 to 70 wt%, preferably from 10 to 60 wt% and further preferably from 20 to 60 wt%. As the triglycerides herein referred to, the above described edible fats and oils may be used, including, for example, but not limited to: vegetable fats and oils such as palm oil, rapeseed oil, soybean oil, corn oil, cottonseed oil, safflower oil, olive oil, coconut oil, or palm kernel oil; animal fats and oils such as milk fat, lard, tallow, fish oil; hydrogenated oils of these plant and animal fats and oils; interesterified oils thereof; and mixtures of two or more of these fats and oils.

Further, the ratio of fats and oils versus liquid sugar indicated above as (c) in the emulsion compositions of the present invention ranges from 1:0.5 to 1:4, preferably from 1:1 to 1:4, further preferably from 1:1 to 1:4 and furthermore preferably from 1:1 to 1:3 in view of stability during mixing. As the liquid sugar herein referred to or starch syrups are used.

For saccharides, it is preferable to use such a liquid sugar that has a sugar content as solid ranging from 40 to 80 wt%, more preferably from 50 to 80 wt% and further preferably from 60 to 75 wt% in view of keeping quality and sweetness.

In addition to the aforementioned fats and oils and saccharides, the emulsion composition of the present invention may contain dairy products including, for example, whole milk powder, buttermilk, skimmed milk powder, sweetened whole condensed milk, sweetened condensed skim milk, fresh cream, or proteins such as sodium caseinate (casein Na), whey and so on; thickeners such as xanthan gum, Cyamoposis Gum, gum arabic, CMC (carboxymethyl cellulose), Locust bean gum, pectin, carrageenan, and so on; emulsifiers such as monoglycerides, organic acid-derived monoglycerides, sucrose fatty acid esters, polyglyceryl fatty acid esters, lecithin, enzyme-treated lecithin, propylene glycol fatty acid esters, and so on, to which milk flavor, vanilla flavor, vanilla essence and like flavors or essences may be added as required.

The emulsion composition of the present invention may be produced by any methods capable of forming a foamed water-in-oil type emulsion composition, it may preferably produced, for example, by first whipping the fats and oils and then adding under agitation thereto one or more flavoring agents such as liquid sugar, jam, chocolate, sweetened condensed milk, etc.

The resultant foamed water-in-oil type emulsion composition of the present invention in its first aspect preferably.has a specific gravity ranging from 0.30 to 0.70 and particularly from 0.40 to 0.60 from a viewpoint of eating texture, in-mouth meltability and smooth texture.

Examples

Preferred examples 1, 2 and comparative examples 1 through 5

For preparation, fats and oils melted at 60 °C were cooled down to 15 °C in a chiller (emulsifying kneader made by Tama Seiki Kogyo Co., Ltd., Tokyo) and then maintained at 20 °C (for tempering) for 1 day followed by storage in a refrigerator (5 °C).

Each fats and oils formulation of 100 parts by weight shown in Table 1 was whipped and mixed under agitation with 180 parts by weight of liquid sugar containing 70 wt% of sugar and 20 parts by weight of condensed milk to produce a foamed water-in-oil type emulsion composition.

Preferred examples 3, 4 and comparative examples 6

For preparation, fats and oils melted at 60 °C were cooled down to 15 °C in a chiller (emulsifying kneader made by Tama Seiki Kogyo Co., Ltd. , Tokyo) and then maintained at 20 °C (for tempering) for 1 day followed by storage in a refrigerator (5 °C).

Each fats and oils formulation of 100 parts by weight shown in Table 1 was whipped and mixed under agitation with 90 parts by weight of liquid sugar (produced by NIHON SHOKUHIN KAKO CO., LTD., Tokyo) containing 70 wt% of sugar and 10 parts by weight of condensed milk (produced by Snow Brand Milk Products Co. Ltd., Tokyo) to produce a foamed water-in-oil type emulsion composition.

Here, the solid fat content (SFC) of the fats and oils at 25 °C used was measured in accordance with the Tentative 1-1996 NMR Method for Solid Fat Content (given in "Standard Fats and Oils Analysis and Test Methods" edited by Japan Oil Chemical Society). Specifically, the solid fat content was determined in the following manner:

1) After keeping each test sample and control sample in a test tube at 60.0±0.2°C for 30 min., NMR signal is read for each sample.

2) These samples are maintained at 0 ± 2 °C for 30 min. and then moved to a 26.0 ± 0.2 °C environment and maintained there for further 30 min.

3) After returning to 0 ± 20 °C environment again and maintaining there for 30 min., the samples are maintained at a predetermined test temperature (25 ± 0.2 °C) for further 30 min. and then NMR signal is read for each sample.

4) The solid fat content at 25 °C is determined using the following formula:

$$\text{Solid fat content (\%)} = 100 - (A/B) \times (C/D) \times 100$$

A: NMR signal reading for control sample at 60 °C
B: NMR signal reading for test sample at 60 °C
C: NMR signal reading for control sample at 25 °C
D: NMR signal reading for test sample at 25 °C

Table 1

EP 1 602 282 B1

| | | | | | | | | | | (wt%) |
|---|---|---|---|---|---|---|---|---|---|---|
| Fats and oils | Preferred example 1 | Preferred example 2 | Preferred example 3 | Preferred example 4 | Comparative example 1[*2] | Comparative example 2[*2] | Comparative example 3 | Comparative example 4 | Comparative example 5 | Comparative example 6 |
| Hydrogenated rapeseed oil (IV69) | 20.0 | 20.0 | 20.0 | 20.0 | | 20.0 | 50.0 | | | 50.0 |
| Hydrogenated rapeseed oil (IV80) | | | | | | | | | | |
| Hydrogenated fish oil (MP 29°C) | | | | | | | | 100.0 | 50.0 | |
| Hydrogenated fish oil (MP 36 °C) | | | | | | | | | 50.0 | |
| Refined rapeseed oil | 20.0 | 0.0 | 20.0 | 0.0 | 0.0 | 80.0 | 50.0 | 0.0 | 0.0 | 50.0 |
| Unsaturated diglyceride[*1] | 60.0 | 80.0 | 60.0 | 80.0 | 100.0 | 0.0 | 0.0 | 0.0 | 0.0 | 0.0 |
| Triglyceride | 48.6 | 31.0 | | | 14.0 | 99.6 | 99.7 | 99.0 | 99.2 | 97.7 |
| Diglyceride | 50.8 | 68.2 | | | 85.0 | 0.3 | 0.2 | 0.6 | 0.5 | 0.2 |
| Monoglyceride | 0.6 | 0.8 | | | 1.0 | 0.1 | 0.1 | 0.4 | 0.3 | 0.1 |
| 25 °C SFC (%) | 2.1 | 2.3 | 2.1 | 2.3 | 0.0 | 2.0 | 16.8 | 4.8 | 9.9 | 16.8 |
| Unsaturated Fatty acid content | 85.9 | 85.2 | | | 88.1 | 88.0 | 82.7 | 62.5 | 60.6 | |
| Melting point (°C) | 26.4 | 26.7 | | | 5.2 | 26.5 | 34.8 | 29.1 | 32.7 | |

| | | | | | | | | | | (wt%) |
|---|---|---|---|---|---|---|---|---|---|---|
| Fats and oils | Preferred example 1 | Preferred example 2 | Preferred example 3 | Preferred example 4 | Comparative example 1*2 | Comparative example 2*2 | Comparative example 3 | Comparative example 4 | Comparative example 5 | Comparative example 6 |
| Specific gravity after whipping | 0.21 | 0.20 | 0.21 | 0.20 | 0.99 | 0.97 | 0.48 | 0.32 | 0.30 | 0.48 |

*1: Using an immobilized 1,3-positions selective lipase (trade name: "Lipozyme 3A), 860 g of a rapeseed oil-derived fatty acid was allowed to react with 140 g of glycerin at 40 °C for 10 hours. After filtering out the lipase agent, the reaction product was subjected to molecular distillation and refined in the usual manner to obtain a liquid unsaturated diglyceride composition. This resultant composition contained 1.0 wt% monoglyceride, 85.0 wt% diglyceride and 14.0 wt% triglyceride.

*2: The comparative examples 1 and 2 did not foam.

For each resultant emulsion composition, the specific gravity was measured using a specific gravity cup.

## Specific gravity (g/mℓ) = cream weight (g)/volume of specific gravity cup (mℓ)

The resultant compositions were subjected to sensory test by 20 expert panelists for evaluation of in-mouth meltability.

Further, after maintaining a filter paper coated with a predetermined quantity of each cream at 25 °C for 2 days, the cream was removed and the quantity of the residual cream impregnated in the filter paper was measured as the oil-off quantity.

For evaluation of 25 °C thermostability, samples having an oil-off smaller than 15% were rated as good (A), with 15 to 20% oil-off as average (B) and 20% or larger oil-off as bad (C).

Further, for overall evaluation, those samples having a specific gravity ranging from 0.35 to 0.70 and rated as good in both in-mouth meltability and thermostability were evaluated as good (A), while samples rated as bad in at least one of these test items were evaluated as bad (C).

The evaluation result is shown in Table 2 below.

Table 2

|  | Preferred examples Comparative examples | | | | | | | | | |
|---|---|---|---|---|---|---|---|---|---|---|
|  | 1 | 2 | 3 | 4 | 1 | 2 | 3 | 4 | 5 | 6 |
| Specific gravity | 0.51 | 0.45 | 0.41 | 0.35 | 1.01 | 0.99 | 0.75 | 0.70 | 0.75 | 0.65 |
| In-mouth meltability | A | A | A+ | A+ | B | B | C | B | C | C |
| 25 °C oil-off | 8.8 | 9.0 | 8.5 | 8.7 | 80.0 | 62.3 | 8.6 | 24.2 | 8.1 | 17.2 |
| 25 °C thermostability | A | A | A | A | C | C | A | C | A | C |
| Overall evaluation | A | A | A | A | C | C | C | C | C | C |

Example 1: Very delicious cream with no problem in in-mouth meltability and thermostability at 25 °C

Example 2: Very delicious cream with no problem in in-mouth meltability and thermostability at 25 °CExample 3: Very delicious cream with no problem in in-mouth meltability and thermostability at 25 °C

Example 4: Very delicious cream with no problem in in-mouth meltability and thermostability at 25 °C

Comparative example 1: Cream had a higher specific gravity underwent separation

Comparative example 2: Cream had a higher specific gravity underwent separation

Comparative example 3: Cream had a bad in-mouth meltability with a higher specific gravity but no problem in 25 °C thermostability

Comparative example 4: Cream underwent oil-off at 25 °C and had somewhat bad in-mouth meltability with a higher specific gravity

Comparative example 5: Cream had bad in-mouth meltability with bad 25 °C thermostability and a higher specific gravity

Comparative example 6: Cream had bad in-mouth meltability with bad 25 °C thermostability and a higher specific gravity

From Tables 1 and 2, it is clearly understood that a foamed water-in-oil type emulsion composition satisfying the range requirements specified according to the present invention in terms of (a) solid fat content of fats and oils at 25 °C, (b) content in fats and oils of unsaturated diglycerides having a carbon number ranging from 16 to 18 and (c) ratio of fats and oils versus liquid sugar can have a good in-mouth meltability and thermostability with lower specific gravity and thus can be used as an excellent buttercream.

**Claims**

1.    A foamed water-in-oil type emulsion composition comprising fats and oils and a liquid sugar selected from starch hydrolysates or starch syrup, wherein (a) said fats and oils have a solid fat content ranging from 0.5 to 5 % thereof at 25°C; (b) said fats and oils contain 40 wt% or more of an unsaturated diglyceride having a carbon number ranging from 16 to 18; 0 to 70 wt% of triglyceride; and 0 to 5 wt% of monoglyceride; and (c) the weight ratio of said fats and oils vs. said liquid sugar ranges from 1:0.5 to 1:4.

2. The foamed water-in-oil type emulsion composition as set forth in claim 1 above, wherein said emulsion composition has a specific gravity ranging from 0.30 to 0.70.

3. The foamed water-in-oil type emulsion composition as set forth in claim 1 or 2 above, wherein said liquid sugar has a sugar content ranging from 40 to 80 wt%.

4. The foamed water-in-oil type emulsion composition as set forth in any one of the preceding claims 1 through 3, wherein the ratio of said fats and oils vs. said liquid sugar ranges from 1:1 to 1:4.

**Patentansprüche**

1. Geschäumte Emulsionszusammensetzung vom Wasser-in-Öl-Typ, die Fette und Öle und einen aus Stärkehydrolysaten oder Stärkesirup ausgewählten flüssigen Zucker umfasst, worin (a) die Fette und Öle einen Gehalt an festem Fett im Bereich von 0,5 bis 5 % davon bei 25°C aufweisen; (b) die Fette und Öle 40 Gew.% oder mehr eines ungesättigten Diglycerids mit einer Kohlenstoffzahl im Bereich von 16 bis 18; 0 bis 70 Gew.% an Triglycerid; und 0 bis 5 Gew.% an Monoglycerid enthalten; und (c) das Gewichtsverhältnis der Fette und Öle gegenüber dem flüssigen Zucker im Bereich von 1:0,5 bis 1:4 liegt.

2. Geschäumte Emulsionszusammensetzung vom Wasser-in-Öl-Typ gemäß Anspruch 1, worin die Emulsionszusammensetzung ein spezifisches Gewicht im Bereich von 0,30 bis 0,70 hat.

3. Geschäumte Emulsionszusammensetzung vom Wasser-in-Öl-Typ gemäß Anspruch 1 oder 2, worin der flüssige Zucker einen Zuckergehalt im Bereich von 40 bis 80 Gew.% hat.

4. Geschäumte Emulsionszusammensetzung vom Wasser-in-Öl-Typ gemäß irgendeinem der vorhergehenden Ansprüche 1 bis 3, worin das Verhältnis der Fette und Öle gegenüber dem flüssigen Zucker im Bereich von 1:1 bis 1:4 liegt.

**Revendications**

1. Composition en mousse sous forme d'émulsion de type eau-dans-l'huile comprenant des matières grasses et des huiles et un sucre liquide choisi parmi des hydrolysats d'amidon ou un sirop d'amidon, où (a) lesdites matières grasses et huiles ont une teneur en corps gras solide allant de 0,5 à 5% de celles-ci à 25°C ; (b) lesdites matières grasses et huiles contiennent 40% en poids ou plus d'un diglycéride insaturé ayant un nombre de carbones allant de 16 à 18 ; 0 à 70% en poids de triglycéride ; et 0 à 5% en poids de monoglycéride ; et (c) le rapport pondéral desdites matières grasses et huiles sur ledit sucre liquide varie de 1:0,5 à 1:4.

2. Composition en mousse sous forme d'émulsion de type eau-dans-l'huile selon la revendication 1 ci-dessus, dans laquelle ladite composition sous forme d'émulsion présente un poids spécifique allant de 0,30 à 0,70.

3. Composition en mousse sous forme d'émulsion de type eau-dans-l'huile selon la revendication 1 ou 2 ci-dessus, dans laquelle ledit sucre liquide présente une teneur en sucre allant de 40 à 80% en poids.

4. Composition en mousse sous forme d'émulsion de type eau-dans-l'huile selon l'une quelconque des revendications précédentes 1 à 3, dans laquelle le rapport desdites matières grasses et huiles sur ledit sucre liquide varie de 1:1 à 1:4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 52126406 A
- JP 61085141 A
- JP 63301765 A
- JP 2001178361 A
- JP 7038780 B

### Non-patent literature cited in the description

- Standard Fats and Oils Analysis and Test Methods